# EUROPÄISCHE PATENTSCHRIFT

(11) **EP 2 388 110 B1**
(45) Veröffentlichungstag und Bekanntmachung des Hinweises auf die Patenterteilung: **03.04.2019**
(21) Anmeldenummer: 11003377.6
(22) Anmeldetag: 21.04.2011
(51) Int. Cl.: B25J 9/16

(54) **Steuereinrichtung und Verfahren zur Sicherheitsüberwachung von Manipulatoren**
Control device and method for monitoring the safety of manipulators
Dispositif de commande et procédé de surveillance de la sécurité de manipulateurs

(30) Priorität: 17.05.2010 DE 102010020750
(43) Veröffentlichungstag der Anmeldung: 23.11.2011
(73) Patentinhaber: KUKA Deutschland GmbH, 86165 Augsburg (DE)
(72) Erfinder: Bonin, Uwe, 86316 Friedberg (DE); Munz, Heinrich, 88368 Bergatreute (DE); Finsterwalder, Thomas, 86179 Augsburg (DE); Weigele, Peter, 86497 Horgau (DE)
(74) Vertreter: Schlotter, Alexander Carolus Paul

(56) Entgegenhaltungen:
- DE-A1-102006 000 635
- US-A1- 2004 010 326

## Beschreibung

Die vorliegende Erfindung betrifft eine Einrichtung, ein System und ein Verfahren zur Sicherheitsüberwachung von Manipulatoren, insbesondere Robotern.

Aus der gattungsbildenden DE 10 2006 000 635 A1 ist eine Robotersteuerungseinheit zur Überwachung der Eigensicherheit eines Industrieroboters bekannt, die beispielsweise ein sicheres Abbremsen, Anhalten, Bewegen mit reduzierter Geschwindigkeit oder Einnehmen einer Absolutlage beinhaltet. Hierzu weist die Robotersteuerungseinheit neben einer Robotersteuerung, die beispielsweise die Roboterbahn kommandiert, und einer Antriebstechnik zur Umsetzung der Steuerbefehle der Robotersteuerung eine Sicherheitssteuerung im Steuerschrank des Roboters auf, die in sicherer Technik mit externen Sicherheitsperipheriekomponenten wie einem Not-Aus-Schalter und der Antriebstechnik verbunden ist. Sie ist funktional und physisch von einer SPS ("speicherprogrammierbare Steuerung") getrennt, die eine übergeordnete Zellensicherheit gewährleistet. Sowohl diese SPS als auch die individuellen Robotersteuerungseinheiten sind durch den Anwender frei konfigurierbar, um ein Höchstmaß an Flexibilität zu ermöglichen.

Die US 2004/0010326 A1 betrifft ein konfigurierbares Sicherheitssystem für eine Industrieanlage mit einer Vielzahl Robotern. Ziel ist es, eine solche Industrieanlage sicher betreiben zu können. Dazu wird von einer Industrieanlage mit mehreren Robotern ausgegangen, welche in Zellen betrieben werden. Aus diesen Zellen ergeben sich so genannte Sicherheitssubsysteme. Diese Sicherheitssubsysteme werden von einer übergeordneten Einheit aus betrieben, welche einen übergeordnetes Sicherheitssystem umfasst sowie eine übergeordnete Steuerung.

Aufgabe der vorliegenden Erfindung ist es, eine gattungsgemäße Manipulatorsicherheitsüberwachung zu verbessern.

Diese Aufgabe wird durch eine Steuereinrichtung mit den Merkmalen des Anspruchs 1 gelöst. Anspruch 8 stellt ein erfindungsgemäßes Verfahren, Anspruch 10 ein

System zur Sicherheitsüberwachung einer Manipulatorenanordnung mit mehreren Manipulatoren und Anspruch 11 eine Manipulatorsteuerungseinheit mit einer erfindungsgemäßen Steuereinrichtung unter Schutz. Die Unteransprüche betreffen vorteilhafte Weiterbildungen.

Eine erfindungsgemäße Steuereinrichtung ist zur individuellen Sicherheitsüberwachung bzw. zur Überwachung der Eigensicherheit eines Manipulators, insbesondere eines Roboters wie eines Industrieroboters, eingerichtet.

Unter individueller bzw. Eigensicherheitsüberwachung wird vorliegend insbesondere eine Überwachung des Manipulators unabhängig von seiner Umgebung, insbesondere weiterer Manipulatoren verstanden, die beispielsweise in einer gemeinsamen Automatisierungs-, insbesondere Fertigungs- oder Montagezelle angeordnet sind.

Sie kann daher insbesondere eine oder mehrere manipulatorzustandsbezogene Sicherheitsfunktionalitäten aufweisen, etwa eine sichere Überwachung der Pose und/oder Geschwindigkeit des Manipulators im Gelenk- bzw. Antriebskoordinatenraum oder im kartesischen bzw. Arbeitsraum. Insbesondere kann sie die sichere Überwachung eines Arbeits-, Melde- und/oder Schutzraumes und/oder einer reduzierten Geschwindigkeit umfassen, die, beispielsweise im Einrichtbetrieb, zum Schutz von Bedienpersonal, Manipulator und Umgebung vorgesehen ist. Zusätzlich oder alternativ kann die individuelle bzw. Eigensicherheitsüberwachung beispielsweise auf den Manipulator wirkende und/oder von ihm ausgeübte Kräfte und Momente, beispielsweise Kontaktkräfte mit der Umgebung oder Antriebsdrehmomente überwachen. Weiter zusätzlich oder alternativ kann die individuelle bzw. Eigensicherheitsüberwachung auch externe, insbesondere manipulatorspezifische Sicherheitsperipheriekomponenten bzw. -funktionalitäten überwachen, etwa einen Nothalt, eine Zustimm- oder Betriebsartenwahleingabe oder einen Bedienerschutz.

Dabei wird vorliegend unter einer Überwachung insbesondere die Erfassung von Zuständen, beispielsweise der Manipulatorpose oder -geschwindigkeit, Eingaben wie beispielsweise der Betätigung eines Zustimmtasters, Kräften bzw. Momenten, einer Raumüberwachungsausgabe, etwa berührungsloser Abstandssensoren wie Laserscannern, eines Kamerabildes oder dergleichen, die Verarbeitung dieser erfassten Bedingungen bzw. Ausgaben, und eine entsprechende vorgegebene Reaktion, beispielsweise die Ausgabe einer Warnung, das Abschalten von Antriebsenergie, das Aktivieren von Bremsen, das Ansteuern einer sicheren Haltepose, das Reduzieren von Geschwindigkeiten oder dergleichen verstanden.

Insbesondere kann eine erfindungsgemäße Steuereinrichtung zur individuellen Sicherheitsüberwachung bzw. zur Überwachung der Eigensicherheit eines Manipulators als Robotersteuerungseinheit ausgebildet sein, wie sie in der DE 10 2006 000 635 A1 beschrieben ist, auf die insoweit vollinhaltlich Bezug genommen wird.

Nach einem ersten Aspekt der vorliegenden Erfindung weist eine erfindungsgemäße Steuereinrichtung zusätzlich eine Sicherheitseinrichtung zur Kommunikation mit wenigstens einer, insbesondere gleichartigen, Steuereinrichtung zur individuellen Sicherheitsüberwachung eines weiteren Manipulators einer Manipulatorenanordnung zur übergeordneten Sicherheitsüberwachung der Manipulatorenanordnung auf.

Erfindungsgemäß wird also die funktionale und physische Trennung der Eigensicherheits- und der übergeordneten Zellensicherheitsüberwachung durch individuelle Robotersteuerungseinheiten und eine mit diesen kommunizierende externe SPS aufgegeben und stattdessen die übergeordnete Zellensicherheitsüberwachung durch eine Sicherheitseinrichtung realisiert, die vorzugsweise in wenigstens eine Steuereinrichtung zur individuellen Sicherheitsüberwachung eines Manipulators hard- und/oder softwaretechnisch integriert ist. Insbesondere können eine solche Sicherheitseinrichtung zur übergeordneten Sicherheitsüberwachung der Manipulatorenanordnung und die Steuereinrichtung zur individuellen Sicherheitsüberwachung des Manipulators auf einer gemeinsamen Hardwareplattform, vorzugsweise einem oder mehreren PCs, und/oder mit einem gemeinsamen Laufzeitsystem, bevorzugt einer Sicherheits-SPS ausgebildet sein.

Diesem Aspekt liegt die Erkenntnis zugrunde, dass die separate, externe SPS, die bislang die übergeordnete Zellensicherheitsüberwachung durchführt, durch eine zusätzliche, erweiternde Funktionalität, beispielsweise entsprechende Hardware- und/oder Programmbereiche bzw. -module, der individuellen Steuereinrichtung eines oder mehrerer Manipulatoren ersetzt werden kann. Vorteilhaft entfällt zum einen gerätetechnischer Aufwand für eine separate SPS. Zum anderen kann die gemeinsame Architektur der individuellen Eigen- und der übergeordneten Zellensicherheitsüberwachung die Anforderungen an die Qualifikation der Anwender reduzieren sowie die Systemintegration verbessern.

Steuereinrichtungen zur individuellen Sicherheitsüberwachung weiterer Manipulatoren der Manipulatorenanordnung werden entsprechend nicht mehr mit einer externen SPS, sondern mit der Sicherheitseinrichtung einer erfindungsgemäß weitergebildeten Steuereinrichtungen verbunden, so dass hier kein signifikanter Mehraufwand entsteht. Die Kommunikation zwischen einer Sicherheitseinrichtung und Steuereinrichtungen weiterer Manipulatoren und/oder zwischen einer Steuereinrichtung und ihrer Sicherheitseinrichtung erfolgt bevorzugt über ein gemeinsames Kommunikationsmedium, beispielsweise ein Bus-System. Vorzugsweise wird ein Ethernet-basiertes Safety-Protokoll verwendet.

Ebenso wie die Steuereinrichtung zur individuellen Sicherheitsüberwachung des Manipulators kann auch die Sicherheitseinrichtung zur übergeordneten Sicherheitsüberwachung der Manipulatorenanordnung zur Anbindung einer oder mehrerer peripheren Sicherheitskomponenten bzw. -funktionalitäten wie etwa einer Nothalt- oder Zustimmeingabe ausgebildet sein. Sie kann beispielsweise einen Nothalt, eine Raum- oder eine Kooperationsüberwachung realisieren.

Nach einem zweiten Aspekt der vorliegenden Erfindung, der vorzugsweise mit dem vorstehend erläuterten ersten Aspekt kombiniert sein kann, weist eine erfindungsgemäße Steuereinrichtung einen nur vom Hersteller konfigurierten sowie einen hiervon soft- und/oder hardwaretechnisch getrennten und mit ihm kommunizierenden, auch durch einen Anwender konfigurierbaren Teil auf, wobei der herstellerkonfigurierte Teil erfindungsgemäß unabhängig von einer Konfigurierung durch einen Anwender eine Grundsicherheitsfunktionalität des Manipulators sicherstellt. "Hersteller" und "Anwender" bezeichnen dabei abstrakt zwei unterschiedliche Autorisierungsstufen, so dass unter einem Hersteller auch entsprechend geschultes und qualifiziertes Personal eines Käufers oder Dienstleisters, umgekehrt unter einem Anwender auch entsprechend ungeschultes und -qualifiziertes Personal eines Produzenten verstanden werden kann.

Durch die Separation in einen anwenderkonfigurierbaren Teil, der die aus der DE 10 2006 000 635 A1 mit frei konfigurierbaren individuellen Sicherheitssteuerungen und übergeordneter SPS bekannte Flexibilität bewahrt, und einen herstellerkonfigurierten Teil, der unabhängig von Anwenderkonfigurationen stets eine Grundsicherheitsfunktionalität des Manipulators sicherstellt, kann eine gleichermaßen flexible wie auch gegen die Folgen von Anwenderfehlern wenigstens teilweise gesicherte Überwachung realisiert werden.

Insbesondere kann bei Kombination mit dem ersten Aspekt der vorliegenden Erfindung der herstellerkonfigurierte Teil zur individuellen Sicherheitsüberwachung des Manipulators und der anwenderkonfigurierbare Teil zur übergeordneten Sicherheitsüberwachung einer Manipulatorenanordnung eingerichtet sein, so dass wie bei herkömmlichen externen, vom Anwender zur Zellensicherheitsüberwachung speicherprogrammierbaren Steuerungen diese durch den Anwender flexibel an die Automatisierungszelle angepasst werden kann, während gleichzeitig der nur vom Hersteller konfigurierbare Teil Grundsicherheitsfunktionalität des Manipulators sicherstellt, etwa eine Antriebs- und/oder Kontaktkraft- bzw. -momentenbegrenzung oder eine Geschwindigkeitsüberwachung. Gleichermaßen kann natürlich auch der herstellerkonfigurierte Teil wenigstens teilweise zur übergeordneten Sicherheitsüberwachung einer Manipulatorenanordnung und/oder der anwenderkonfigurierbare Teil wenigstens teilweise zur individuellen Sicherheitsüberwachung des Manipulators eingerichtet sein,

Eine anwenderkonfigurierungsunabhängigen Grundsicherheitsfunktionalität kann beispielsweise dadurch sichergestellt werden, dass der herstellerkonfigurierte Teil wenigstens eine logische UND- oder ODER-Verknüpfung mit einem Ausgang des anwenderkonfigurierbaren Teils aufweist. Ist beispielsweise eine Freigabe ("Fh") im herstellerkonfigurierten Teil mit einer Freigabe ("Fa") am Ausgang des anwenderkonfigurierbaren Teils mit einem logischen UND ("∧" bzw. "&") zu einer Gesamtfreigabe verknüpft oder eine fehlende Freigabe bzw. ein Fehlersignal ("¬Fh") im herstellerkonfigurierten Teil mit einer fehlende Freigabe bzw. ein Fehlersignal ("¬Fa") am Ausgang des anwenderkonfigurierbaren Teils mit einem logischen ODER ("∨"), so erfolgt die Gesamtfreigabe unabhängig von der Konfigurierung durch einen Anwender stets nur, wenn (auch) eine Freigabe im herstellerkonfigurierten Teil vorliegt, dort nicht fehlt bzw. dort kein Fehlersignal anliegt. Natürlich kann die UND- bzw. ODER-Verknüpfung beispielsweise auch durch eine NOR- bzw. Peirce-Verknüpfung, eine NAND- bzw. Sheffer-Verknüpfung, bzw. exklusive (Nicht)ODER-Verknüpfungen mit den Komplementen realisiert sein:

| herstellerkonfigurierter Teil | Ausgang des Anwender-konfigurierbaren Teils | (Fh UND Fa) bzw. Nicht: (¬Fh ODER ¬Fa) bzw. (¬Fh NOR ¬Fa) |
|---|---|---|
| Freigabe Fh | Freigabe Fa | Gesamtfreigabe |
| Freigabe Fh | keine Freigabe bzw. Fehlersignal ¬Fa | keine Gesamtfreigabe |
| keine Freigabe bzw. Fehlersignal ¬Fh | Freigabe Fa | keine Gesamtfreigabe |
| keine Freigabe bzw. Fehlersignal ¬Fh | keine Freigabe bzw. Fehlersignal ¬Fa | keine Gesamtfreigabe |

Zusätzlich oder alternativ kann der herstellerkonfigurierte Teil einen von dem anwenderkonfigurierbaren Teil unabhängigen Ausgang aufweisen, der beispielsweise bei Eingang eines Nothalt-Signals von einer Robotersteuerung oder eines Not-Aus-Knopfes stets einen Nothalt ausführt.

Eine erfindungsgemäße Steuereinrichtung ist vorzugsweise mit einer Manipulatorsteuerung zur Kommandierung einer Bewegung des Manipulators in einer Manipulatorsteuerungseinheit integriert, insbesondere soft- und/oder hardwaretechnisch in dieser implementiert, um Verkabelungsaufwand weiter zu reduzieren.

Weitere Vorteile und Merkmale ergeben sich aus den Unteransprüchen und den Ausführungsbeispielen. Hierzu zeigt, teilweise schematisiert:
- Fig. 1:: eine Roboteranordnung mit einer Sicherheitsüberwachung nach betriebsinterner Praxis;
- Fig. 2:: eine Roboteranordnung mit einer Sicherheitsüberwachung nach einer Ausführung der vorliegenden Erfindung; und
- Fig. 3:: eine Steuereinrichtung der Roboteranordnung nach Fig. 2.

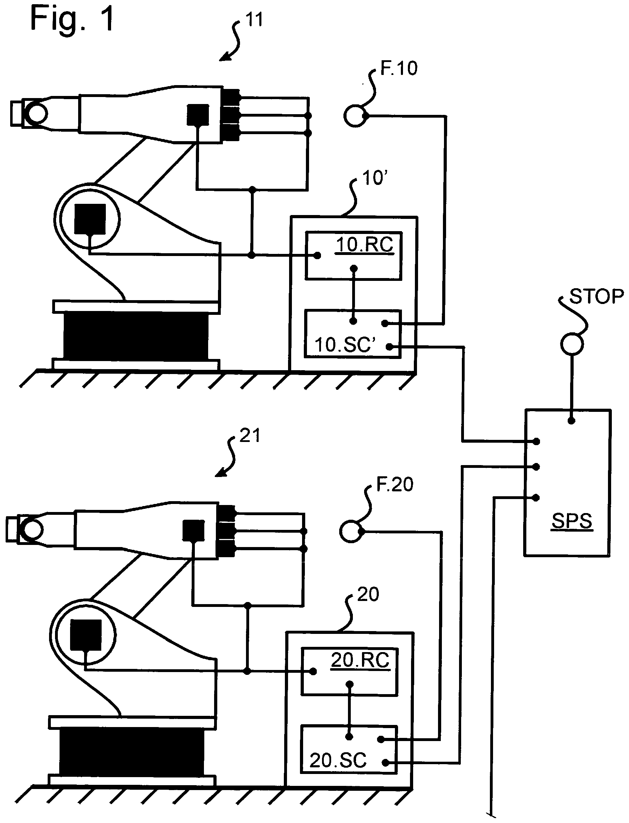

Fig. 1 zeigt eine Anordnung von mehreren Robotern, von denen nur zwei Sechsachs-Industrieroboter 11, 21 dargestellt sind, mit einer Sicherheitsüberwachung nach bisheriger betriebsinterner Praxis.

Jeder Roboter weist eine Robotersteuerungseinheit 10' bzw. 20 auf, die einerseits eine Robotersteuerung und Antriebstechnik 10.RC bzw. 20.RC und andererseits eine Steuereinrichtung 10.SC' bzw. 20.SC zur individuellen bzw. Eigensicherheitsüberwachung des jeweiligen Roboters 11 bzw. 21 umfasst. Diese überwacht beispielsweise die Posen und Antriebsdrehmomente des jeweiligen Roboters und kommuniziert hierzu mit der jeweiligen Robotersteuerung und Antriebstechnik 10.RC bzw. 20.RC, die ihrerseits mit den Antriebsmotoren der Roboter kommuniziert, wie in Fig. 1 durch Anschlusslinien angedeutet. Zusätzlich sind die Steuereinrichtungen 10.SC', 20.SC des jeweiligen Roboters 11 bzw. 21 mit einem externen Zustimmtaster F.10 bzw. F.20 verbunden.

Die Steuereinrichtungen 10.SC', 20.SC realisieren die individuelle bzw. Eigensicherheitsüberwachung des jeweiligen Roboters 11 bzw. 21, indem sie seine Posen, Antriebsdrehmomente und Zustimmeingänge F.10 bzw. F.20 überwachen und beispielsweise bei Eindringen in einen Schutzraum, Überschreiten eines Maximaldrehmomentes an einem Antrieb oder Nicht-Betätigung eines Zustimmtasters eine entsprechende Reaktion bewirken, zum Beispiel einen STOP 0, STOP 1, STOP 2, eine sichere Reduzierung der Geschwindigkeit, eine Ausweich- bzw. Rückholbewegung oder dergleichen.

Zusätzlich ist nach betriebsinterner Praxis eine externe SPS vorgesehen, die mit den Steuereinrichtungen 10.SC', 20.SC und einem externen Not-Aus-Knopf STOP am Eingang eines Schutzzaunes (nicht dargestellt) verbunden ist. Diese vom Anwender frei programmierbare SPS realisiert eine übergeordnete Zellensicherheitsüberwachung und überwacht beispielsweise, ob alle Schutztüren des Schutzzaunes geschlossen und quittiert wurden (nicht dargestellt). Stellt die SPS einen Fehler fest oder erhält sie ein Fehlersignal von einer der Steuereinrichtungen 10.SC', 20.SC, so reagiert sie in der vom Anwender vorgegebenen Weise, beispielsweise durch koordiniertes Stillsetzen oder Verfahren der Roboter 11, 21.

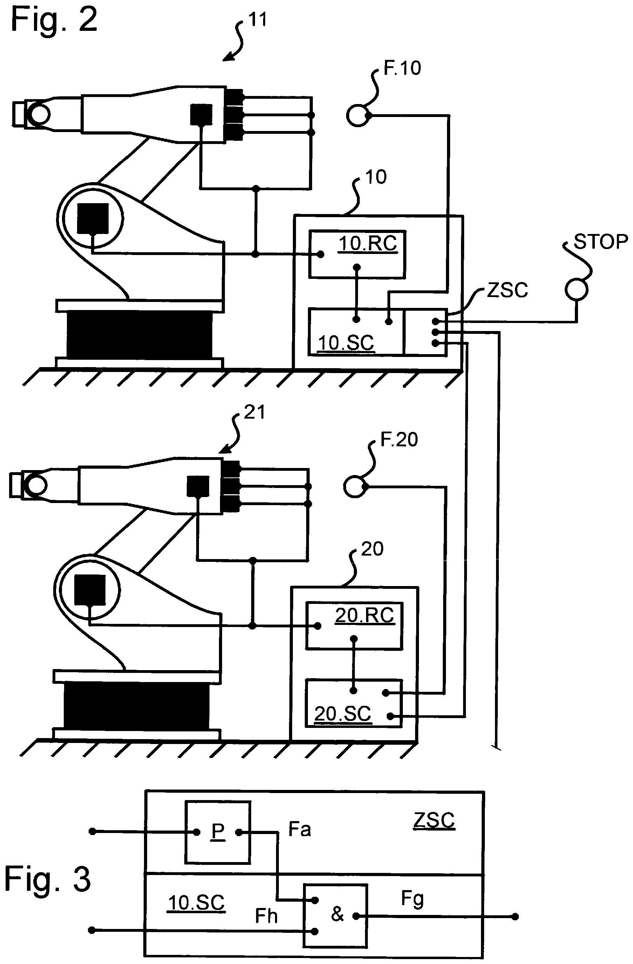

Fig. 2 zeigt in Fig. 1 entsprechender Darstellung ein Sicherheitsüberwachungssystem nach einer Ausführung der vorliegenden Erfindung, so dass durch die Zusammenschau mit der Fig. 1 der Unterschied zur betriebsinternen Praxis deutlich wird. Dabei sind einander entsprechende Merkmale mit denselben Bezugszeichen bezeichnet, so dass nachfolgend nur auf diese Unterschiede eingegangen wird.

In die Steuereinrichtung 10.SC zur individuellen Sicherheitsüberwachung des Roboters 11 ist erfindungsgemäß eine Sicherheitseinrichtung ZSC integriert, indem auf einer gemeinsamen Hardwareplattform, im Ausführungsbeispiel einem PC, mit einer Sicherheits-SPS als gemeinsamem Laufzeitsystem entsprechende Soft- und Hardwaremodule bzw. -komponenten vorgesehen sind, die insbesondere dazu eingerichtet sind, mit den Steuereinrichtungen der anderen Roboter und dem externen Not-Aus-Knopf STOP am Eingang eines Schutzzaunes zu kommunizieren und die übergeordneten Zellensicherheitsüberwachung der Manipulatorenanordnung zu realisieren, die in der bisherigen Praxis von der externen SPS umgesetzt wurde. So überwacht beispielsweise nunmehr die in die Steuerungseinrichtung 10.SC integrierte ZSC, ob alle Schutztüren des Schutzzaunes geschlossen und quittiert wurden und ob von Steuerungseinrichtungen 20.SC anderer Roboter 21 Fehlersignale empfangen werden, und reagiert entsprechend durch Instruierung der Steuerungseinrichtungen 10.SC, 20.SC zu einem koordinierten Stillsetzen oder Verfahren der Roboter 11, 21.

Die Steuerungseinrichtungen der weiteren Roboter, von denen in Fig. 2 nur die Steuerungseinrichtung 20.SC und die Anbindung an eine weitere Steuerungseinrichtung dargestellt sind, können ebenso wie externe Sicherheitsperipheriekomponenten wie der Not-Aus-Knopf STOP anstatt mit der externen SPS in gleicher Weise nun mit der Sicherheitseinrichtung ZSC der Steuerungseinrichtung 10.SC verbunden werden. Die Kommunikation zwischen den Steuerungseinrichtungen und der Sicherheitseinrichtung erfolgt über ein Ethernet-basiertes Safety-Protokoll.

Fig. 3 zeigt ausschnittsweise die Steuerungseinrichtung 10.SC mit der auf der gemeinsamen Plattform und mit dem gemeinsamen Laufzeitsystem integrierten Sicherheitseinrichtung ZSC. Beide sind, beispielsweise durch unterschiedliche Steckkarten und/oder programmtechnische Kapselung hard- bzw. softwaretechnisch so voneinander geteilt, dass die Steuerungseinrichtung 10.SC als nur vom Hersteller konfigurierter Teil, die Sicherheitseinrichtung ZSC als gegebenenfalls vom Hersteller vorkonfigurierter, aber auch durch einen Anwender konfigurierbarer Teil ausgebildet ist.

Der Anwender kann so beispielsweise die übergeordnete Zellensicherheitsüberwachung flexibel an weitere Roboter, Schutztüren oder andere Arbeits- bzw. Schutzräume anpassen, indem er eine entsprechende Komponente P geeignet umprogrammiert, beispielsweise zusätzliche Eingänge berücksichtigt, zusätzliche Verknüpfungen vorsieht oder dergleichen.

Ein Ausgang dieser Komponente P, der ein Freigabesignal Fa der übergeordneten Zellensicherheitsüberwachung beispielsweise infolge geschlossener und quittierter Schutztüren und nicht aktiviertem Not-Aus-Knopf STOP vermittelt, wird in einer UND-Verknüpfung mit einem Freigabesignal Fh der herstellerkonfigurierten Steuereinrichtung 10.SC beispielsweise infolge eingehaltener Antriebsmomenten- und Arbeitsraumbeschränkungen derart verknüpft, dass ein Gesamtfreigabesignal Fg, das zu einem Automatikbetrieb der Roboter 11, 21 erforderlich ist, nur an die Steuereinrichtungen 10, 20 übermittelt werden, wenn sowohl die Freigabe Fh der individuellen bzw. Eigensicherheitsüberwachung als auch die Freigabe Fa der übergeordneten Zellensicherheitsüberwachung vorliegen.

Man erkennt, dass unabhängig von einer möglicherweise fehlerhaften Konfiguration der Komponente P durch den Anwender die Eigensicherheit der Roboter weiterhin gewährleistet bleibt, da bei einem Fehlersignal bzw. Absenz eines Freigabesignals im nur vom Hersteller konfigurierbaren Teil 10.SC durch die UND-Verknüpfung kein Gesamtfreigabesignal ausgegeben wird. Dieser Aspekt wurde im Ausführungsbeispiel anhand der Teile Steuer- und Sicherheitseinrichtung erläutert, kann aber in gleicher Weise zum Beispiel auch in einer Steuereinrichtung zur individuellen Sicherheitsüberwachung eines Einzelroboters umgesetzt sein, indem diese einen vom Hersteller konfigurierten sowie einen auch durch einen Anwender konfigurierbaren Teil aufweist, wobei der herstellerkonfigurierte Teil anwenderkonfigurierungsunabhängig eine Grundsicherheitsfunktionalität des Manipulators sicherstellt.

### Bezugszeichenliste

- 10, 10', 20: Robotersteuerungseinheit
- 10.RC, 20.RC: Robotersteuerung und Antriebstechnik
- 10.SC, 10.SC', 20.SC: Steuereinrichtung zur individuellen Sicherheitsüberwachung
- F.10, F.20: Zustimmtaster
- STOP: Not-Aus-Knopf
- ZSC: Sicherheitseinrichtung zur übergeordneten Sicherheitsüberwachung
- SPS: externe SPS
- Fa/Fh/Fg: Freigabesignal am Ausgang des anwenderkonfigurierbaren Teils/im herstellerkonfigurierten Teil/Gesamt

## Patentansprüche

1. Steuereinrichtung (10.SC) zur individuellen Sicherheitsüberwachung eines Manipulators, insbesondere eines Roboters (11),
**gekennzeichnet durch**
einen vom Hersteller konfigurierten sowie einen durch einen Anwender konfigurierbaren Teil (ZSC), wobei der herstellerkonfigurierte Teil (10.SC) anwenderkonfigurierungsunabhängig eine Grundsicherheitsfunktionalität des Manipulators sicherstellt und wobei der herstellerkonfigurierte Teil eine logische UND- oder ODER-Verknüpfung mit einem Ausgang des anwenderkonfigurierbaren Teils (P) aufweist.

2. Steuereinrichtung nach Anspruch 1, **gekennzeichnet durch** eine Sicherheitseinrichtung (ZSC), die zur Kommunikation mit einer, insbesondere gleichartigen, Steuereinrichtung (20.SC) zur individuellen Sicherheitsüberwachung eines weiteren Manipulators (21) einer Manipulatorenanordnung zur übergeordneten Sicherheitsüberwachung der Manipulatorenanordnung eingerichtet ist.

3. Steuereinrichtung nach Anspruch 1 oder 2, **dadurch gekennzeichnet, dass** die Sicherheitseinrichtung (ZSC) zur übergeordneten Sicherheitsüberwachung der Manipulatorenanordnung in die Steuereinrichtung (10.SC) zur individuellen Sicherheitsüberwachung des Manipulators (11) hard- und/oder softwaretechnisch integriert ist, insbesondere die Sicherheitseinrichtung und die Steuereinrichtung auf einer gemeinsamen Hardwareplattform (10) und/oder mit einem gemeinsamen Laufzeitsystem ausgebildet sind; und/oder der herstellerkonfigurierte Teil (10.SC) und der anwenderkonfigurierbare Teil (ZSC) hard- und/oder softwaretechnisch integriert, insbesondere auf einer gemeinsamen Hardwareplattform (10) und/oder mit einem gemeinsamen Laufzeitsystem ausgebildet sind.

4. Steuereinrichtung nach einem der vorhergehenden Ansprüche, **dadurch gekennzeichnet, dass** die Steuereinrichtung (10.SC) zur individuellen Sicherheitsüberwachung des Manipulators eine manipulatorzustandsbezogene Sicherheitsfunktionalität aufweist.

5. Steuereinrichtung nach einem der vorhergehenden Ansprüche, **dadurch gekennzeichnet, dass** die Steuereinrichtung zur individuellen Sicherheitsüberwachung des Manipulators und/oder die Sicherheitseinrichtung zur übergeordneten Sicherheitsüberwachung der Manipulatorenanordnung zur Anbindung einer peripheren Sicherheitskomponente (F.10, F.20, STOP) ausgebildet ist.

6. Steuereinrichtung nach einem der vorhergehenden Ansprüche, **dadurch gekennzeichnet, dass** der herstellerkonfigurierte Teil zur individuellen Sicherheitsüberwachung des Manipulators und der anwenderkonfigurierbare Teil zur übergeordneten Sicherheitsüberwachung einer Manipulatorenanordnung eingerichtet ist.

7. Steuereinrichtung nach einem der vorhergehenden Ansprüche, **dadurch gekennzeichnet, dass** der herstellerkonfigurierte Teil einen von dem anwenderkonfigurierbaren Teil unabhängigen Ausgang aufweist.

8. Verfahren zur individuellen Sicherheitsüberwachung eines Manipulators mittels einer Steuereinrichtung nach einem der vorhergehenden Ansprüche, **dadurch gekennzeichnet, dass**
ein Teil (10.SC) der Steuereinrichtung vom Hersteller konfiguriert wird und ein Teil (ZSC) der Steuereinrichtung durch einen Anwender konfiguriert wird, wobei der herstellerkonfigurierte Teil anwenderkonfigurierungsunabhängig eine Grundsicherheitsfunktionalität des Manipulators sicherstellt und wobei der herstellerkonfigurierte Teil logisch UND- oder ODER-verknüpft mit einem Ausgang des anwenderkonfigurierbaren Teils (P) ist.

9. Verfahren nach Anspruch 8, **dadurch gekennzeichnet, dass** eine Sicherheitseinrichtung (ZSC) einer Steuereinrichtung (10.SC) zur individuellen Sicherheitsüberwachung eines Manipulators (11) mit einer Steuereinrichtung (20.SC) zur individuellen Sicherheitsüberwachung eines weiteren Manipulators (21) einer Manipulatorenanordnung zur übergeordneten Sicherheitsüberwachung der Manipulatorenanordnung kommuniziert.

10. System zur Sicherheitsüberwachung einer Manipulatorenanordnung mit mehreren Manipulatoren, insbesondere Robotern (11, 21), umfassend wenigstens eine Steuereinrichtung (10.SC) zur individuellen Sicherheitsüberwachung eines Manipulators (11) der Manipulatorenanordnung nach einem der vorhergehenden Ansprüche 1 bis 7 mit einer Sicherheitseinrichtung (ZSC), die zur Kommunikation mit einer, insbesondere gleichartigen, Steuereinrichtung (20.SC) zur individuellen Sicherheitsüberwachung eines weiteren Manipulators (21) der Manipulatorenanordnung zur übergeordneten Sicherheitsüberwachung der Manipulatorenanordnung eingerichtet ist.

11. Manipulatorsteuerungseinheit (10) mit einer Manipulatorsteuerung (10.RC) zur Kommandierung einer Bewegung eines Manipulators (11), und einer, insbesondere integrierten, Steuereinrichtung (10.SC) zur individuellen Sicherheitsüberwachung des Manipulators nach einem der vorhergehenden Ansprüche 1 bis 7.

## Claims

1. A control device (10.SC) for the individual safety monitoring of a manipulator, in particular a robot (11),
**characterized by**
a part configured by the manufacturer, as well as a part configurable by a user (ZSC), wherein the part configured by the manufacturer (10.SC) ensures a basic safety functionality of the manipulator independently of the user configuration, and wherein the part configured by the manufacturer has a logical AND or OR connection with an output of the part configurable by a user (P).

2. The control device according to claim 1, **characterized by** a safety device (ZSC) which is arranged for communication with a control device (20.SC), in particular of the same type, for the individual safety monitoring of a further manipulator (21) of a manipulator arrangement for the overarching safety monitoring of the manipulator arrangement.

3. The control device according to claim 1 or 2, **characterized in that** the safety device (ZSC) for the overarching safety monitoring of the manipulator arrangement is integrated into the control device (10.SC) for the individual safety monitoring of the manipulator (11) in terms of hardware and / or software, in particular that the safety device and the control device are constructed on a common hardware platform (10) and / or with a common runtime system; and / or
that the part configured by the manufacturer (10.SC) and the part configurable by a user (ZSC) are integrated in terms of hardware and / or software, in particular that they are constructed on a common hardware platform (10) and / or with a common runtime system.

4. The control device according to any one of the preceding claims, **characterized in that** the control device (10.SC) comprises a manipulator state-related safety functionality for the individual safety monitoring of the manipulator.

5. The control device according to any one of the preceding claims, **characterized in that** the control device for the individual safety monitoring of the manipulator and / or the safety device for the overarching safety monitoring of the manipulator arrangement is constructed for connecting a peripheral safety component (F.10, F.20, STOP).

6. The control device according to any one of the preceding claims, **characterized in that** the part configured by the manufacturer is arranged for the individual safety monitoring of the manipulator and the part configurable by a user is arranged for the overarching safety monitoring of a manipulator arrangement.

7. The control device according to any one of the preceding claims, **characterized in that** the part configured by the manufacturer has an output which is independent of the part configurable by a user.

8. A method for the individual safety monitoring of a manipulator by means of a control device according to any one of the preceding claims, **characterized in that** a part (10.SC) of the control device is configured by the manufacturer and a part (ZSC) of the control device is configured by a user, wherein the part configured by the manufacturer ensures a basic safety functionality of the manipulator independently of the user configuration, and wherein the part configured by the manufacturer has a logical AND or OR connection with an output of the part configurable by a user (P).

9. The method according to claim 8, **characterized in that** a safety device (ZSC) of a control device (10.SC) for the individual safety monitoring of a manipulator (11) communicates with a control device (20.SC) for the individual safety monitoring of a further manipulator (21) of a manipulator arrangement for the overarching safety monitoring of the manipulator arrangement.

10. A System for the safety monitoring of a manipulator arrangement having a plurality of manipulators, in particular robots (11, 21), comprising at least one control device (10.SC) for the individual safety monitoring of a manipulator (11) of the manipulator arrangement according to any one of the preceding claims 1 to 7 with a safety device (ZSC) which is arranged for communication with a control device (20.SC), in particular of the same type, for the individual safety monitoring of a further manipulator (21) of the manipulator arrangement for the overarching safety monitoring of the manipulator arrangement.

11. A manipulator control unit (10) having a manipulator control (10.RC) for commanding a movement of a manipulator (11), and a control device (10.SC), in particular an integrated control device (10.SC), for the individual safety monitoring of the manipulator according to any one of the preceding claims 1 to 7.

## Revendications

1. Dispositif de commande (10.SC) pour la surveillance de sécurité individuelle d'un manipulateur, en particulier d'un robot (11),
**caractérisé par**
un élément configuré par le fabricant ainsi qu'un élément configurable par un utilisateur (ZSC), dans lequel l'élément configuré par le fabricant (10.SC) assure une fonctionnalité de sécurité de base du manipulateur indépendamment de la configuration de l'utilisateur et dans lequel l'élément configuré par le fabricant présente une liaison ET ou OU logique avec une sortie de l'élément (P) configurable par l'utilisateur.

2. Dispositif de commande selon la revendication 1, **caractérisé par** un dispositif de sécurité (ZSC), qui est aménagé pour la communication avec un dispositif de commande (20.SC), en particulier de même type, pour la surveillance de sécurité individuelle d'un autre manipulateur (21) d'un agencement de manipulateurs pour la surveillance de sécurité supérieure de l'agencement de manipulateurs.

3. Dispositif de commande selon la revendication 1 ou 2, **caractérisé en ce que** le dispositif de sécurité (ZSC) pour la surveillance de sécurité supérieure de l'agencement de manipulateurs est intégré du point de vue matériel et/ou logiciel dans le dispositif de commande (10.SC) pour la surveillance de sécurité individuelle du manipulateur (11), en particulier le dispositif de sécurité et le dispositif de commande sont réalisés sur une plateforme matérielle commune (10) et/ou avec un système de temps de fonctionnement commun ; et/ou
l'élément configuré par le fabricant (10.SC) et l'élément configurable par l'utilisateur (ZSC) sont réalisés intégrés du point de vue matériel et/ou logiciel, en particulier sur une plateforme matérielle commune (10) et/ou avec un temps de fonctionnement commun.

4. Dispositif de commande selon l'une quelconque des revendications précédentes, **caractérisé en ce que** le dispositif de commande (10.SC) pour la surveillance de sécurité individuelle du manipulateur présente une fonctionnalité de sécurité se rapportant à l'état du manipulateur.

5. Dispositif de commande selon l'une quelconque des revendications précédentes, **caractérisé en ce que** le dispositif de commande pour la surveillance de sécurité individuelle du manipulateur et/ou le dispositif de sécurité pour la surveillance de sécurité supérieure de l'agencement de manipulateurs est réalisé pour le raccordement d'un composant de sécurité périphérique (F.10, F.20, STOP).

6. Dispositif de commande selon l'une quelconque des revendications précédentes, **caractérisé en ce que** l'élément configuré par le fabricant est aménagé pour la surveillance de sécurité individuelle du manipulateur et l'élément configurable par l'utilisateur est aménagé pour la surface de sécurité supérieure d'un agencement de manipulateurs.

7. Dispositif de commande selon l'une quelconque des revendications précédentes, **caractérisé en ce que** l'élément configuré par le fabricant présente une sortie indépendante de l'élément configurable par l'utilisateur.

8. Procédé de surveillance de sécurité individuelle d'un manipulateur au moyen d'un dispositif de commande selon l'une quelconque des revendications précédentes, **caractérisé en ce que**
un élément (10.SC) du dispositif de commande est configuré par le fabricant et un élément (ZSC) du dispositif de commande est configuré par un utilisateur, dans lequel l'élément configuré par le fabricant assure une fonctionnalité de sécurité de base du manipulateur indépendamment de la configuration de l'utilisateur et dans lequel l'élément configuré par le fabricant est en liaison ET ou OU logique avec une sortie de l'élément (P) configurable par l'utilisateur.

9. Procédé selon la revendication 8, **caractérisé en ce qu'**un dispositif de sécurité (ZSC) d'un dispositif de commande (10.SC) pour la surveillance de sécurité individuelle d'un manipulateur (11) communique avec un dispositif de commande (20.SC) pour la surveillance de sécurité individuelle d'un autre manipulateur (21) d'un agencement de manipulateurs pour la surveillance de sécurité supérieure de l'agencement de manipulateurs.

10. Système de surveillance de sécurité d'un agencement de manipulateurs avec plusieurs manipulateurs, en particulier robots (11, 21), comprenant au moins un dispositif de commande (10.SC) pour la surveillance de sécurité individuelle d'un manipulateur (11) de l'agencement de manipulateurs selon l'une quelconque des revendications 1 à 7 avec un dispositif de sécurité (ZSC), qui est aménagé pour la communication avec un dispositif de commande (20.SC), en particulier de même type, pour la surveillance de sécurité individuelle d'un autre manipulateur (21) de l'agencement de manipulateurs pour la surveillance de sécurité supérieure de l'agencement de manipulateurs.

11. Unité de commande de manipulateur (10) avec une commande de manipulateur (10.RC) pour la commande d'un mouvement d'un manipulateur (11), et un dispositif de commande (10.SC), en particulier intégré, pour la surveillance de sécurité individuelle du manipulateur selon l'une quelconque des revendications 1 à 7.
